# EUROPEAN PATENT APPLICATION

(11) **EP 4 832 113 A1**
(43) Date of publication of application: **28.10.2026**
(21) Application number: 24908087.0
(22) Date of filing: 18.12.2024
(51) Int. Cl.: H01M 4/587, H01M 4/36, H01M 4/134, H01M 4/133, H01M 4/1395, H01M 4/1393, H01M 10/052, H01M 4/02

(54) **NEGATIVE ELECTRODE MATERIAL FOR LITHIUM SECONDARY BATTERY AND METHOD FOR MANUFACTURING SAME**

(30) Priority: 18.12.2023 KR 20230185128
(71) Applicant: POSCO Holdings Inc., Pohang-si, Gyeongsangbuk-do 37859 (KR)
(72) Inventor: YOU, Seung-Jae, Pohang-si, Gyeongsangbuk-do 37877 (KR); WOO, Jung-Gyu, Pohang-si, Gyeongsangbuk-do 37877 (KR); JO, Hyun-Chul, Pohang-si, Gyeongsangbuk-do 37877 (KR); LEE, Jae-Yoon, Sejong 30003 (KR)
(74) Representative: Pfenning, Meinig & Partner mbB
(86) International application number: PCT/KR2024/020645
(87) International publication number: WO 2025/135804

(57) **Abstract**

An aspect of the present invention relates to a negative electrode material for a lithium secondary battery, a lithium secondary battery including the negative electrode material and a method for manufacturing same, the negative electrode material including a silicon-carbon composite capable of ensuring high capacity characteristics and excellent lifespan characteristics and including silicon nanoparticles, crystalline carbon, and first amorphous carbon, wherein the silicon nanoparticles and the crystalline carbon are distributed in the first amorphous carbon, wherein the silicon nanoparticles have a Dmax particle size of less than 250 nm and a grain size of 16.5 nm or more and less than 18 nm.

## Description

### Technical Field

The present disclosure relates to a negative electrode material for a lithium secondary battery and a method for manufacturing the same.

### Background Art

A lithium secondary battery generally includes a positive electrode including a positive electrode material, a negative electrode including a negative electrode material, a separator, and an electrolyte, and is a secondary battery in which charging and discharging are performed by intercalation-deintercalation of lithium ions. Since a lithium secondary battery has high energy density and a high electromotive force and may exhibit high capacity, it is being applied to various field such as mobile devices, electric vehicles, and hybrid electric vehicles.

As a positive electrode material forming the positive electrode of the lithium secondary battery, a metal oxide such as LiCoO₂, LiMnO₂, LiMn₂O₄, or LiCrO₂ is used, and as a negative electrode material forming the negative electrode, lithium metal, a carbon-based material such as graphite or activated carbon and a metal-based material such as a silicon oxide (SiOₓ) are used.

As the carbon-based negative electrode material, various types of materials, for example, natural graphite and artificial graphite which are a crystalline carbon-based material, or hard carbon and soft carbon which are an amorphous carbon-based material are being used. Among them, a graphite-based negative electrode material which has excellent reversibility and is favorable for lifespan characteristics of a lithium secondary battery is the most widely used.

However, since the graphite-based negative electrode material has a relatively low theoretical capacity value (for example, about 372 mAh/g in the case of a LiC₆ negative electrode), it is somewhat insufficient to satisfy the electrochemical properties required in the related market.

Therefore, many researchers are interested in Group IV elements (Si, Ge, Sn) in the periodic table, and among them, in particular, silicon is receiving attention as a very attractive material due to its very high theoretical capacity (Li₁₅Si₄: 3600 mAh/g) and low operating voltage (~0.1 V vs. Li/Li+) characteristics. However, during silicon charging and discharging, large volume expansion and shrinkage occurs due to a reaction with lithium, and thus, pulverization of silicon active material powder and poor electrical contact between silicon active material powder and a current collector may occur. Due to the phenomenon, a lithium secondary battery including silicon may have a rapidly reduced capacity as the charge-discharge cycle proceeds.

### Summary of Invention

### Technical Problem

An aspect of the present disclosure is to provide a negative electrode material for a lithium secondary battery which may secure high capacity characteristics and excellent lifespan characteristics, and a method for manufacturing the same.

An object of the present disclosure is not limited to the above description. Any person with ordinary skill in the art to which the present disclosure pertains will have no difficulty in understanding further objects of the present disclosure from the general description the present specification.

### Solution to Problem

According to an aspect of the present disclosure, a negative electrode material for a lithium secondary battery includes: a silicon-carbon composite including silicon nanoparticles, crystalline carbon, and first amorphous carbon, wherein the silicon nanoparticles and the crystalline carbon are distributed in the first amorphous carbon, and the silicon nanoparticles have a Dmax particle size of less than 250 nm and a crystallite size of 16.5 nm or more and less than 18 nm. In addition, the first amorphous carbon described above may be carbonized pitch having a fixed carbon content of 70% or more and a β-resin value of 25% or more.

The silicon nanoparticles described above may have a D50 particle size of 115 nm or more and 150 nm or less.

The crystalline carbon described above may be any one or more of artificial graphite, flake graphite, amorphous graphite, CNT, and graphene.

The negative electrode material described above may include the silicon-carbon composite as a core and may further include a second amorphous carbon layer surrounding the surface of the silicon-carbon composite.

The negative electrode material described above may have a D50 particle size of 10 µm or more and 15 µm or less.

The negative electrode material described above may have a specific surface area of less than 6 m²/g.

According to another aspect of the present disclosure, a method for manufacturing a negative electrode material for a lithium secondary battery includes: pulverizing a silicon raw material (poly-Si) through mechanical milling to obtain silicon nanoparticles; adding crystalline carbon and pitch to the silicon nanoparticles and then mixing them to obtain a mixture; pressure molding the mixture to obtain a molded body; carbonizing the molded body; and pulverizing and classifying the molded body, wherein a slurry processing rate (flow rate) in the mechanical milling is 1.5 kg/min or more and 2.3 kg/min or less. In addition, the pitch described above may have a fixed carbon content of 70% or more and a β-resin value of 25% or more.

The crystalline carbon described above may be any one or more of artificial graphite, flake graphite, amorphous graphite, CNT, and graphene.

A solvent in the mechanical milling described above may be ethanol or IPA.

The mixing described above may be performed through a contact-mediated milling process among powders.

During the pressure molding described above, a pressure of less than 1 ton/cm² may be applied.

The pulverization described above may be a dry pulverization process.

The method for manufacturing a negative electrode material for a lithium secondary battery may further include performing carbon coating on a surface of the manufactured negative electrode material.

### Advantageous Effects of Invention

The negative electrode material of the present disclosure may secure high capacity characteristics and excellent lifespan characteristics, by controlling the particle size and crystallite size of silicon nanoparticles included in the negative electrode material.

In particular, the present disclosure may provide a method for manufacturing a negative electrode material for a lithium secondary battery which may facilitate mass production of the negative electrode material described above.

### Best Mode for Invention

Hereinafter, the preferred example embodiments in the present disclosure will now be described in detail. However, the example embodiments in the present disclosure may be modified in many different forms, and the scope of the present disclosure is not limited to the example embodiments set forth herein.

In the present specification, the term "comprising" is used to indicate further inclusion of other constituent elements rather than exclusion of other constituent elements, unless otherwise particularly stated.

In addition, unless otherwise defined in the specification of the present disclosure, % unit refers to wt%.

Though not essential, it should be noted that the technical solution according to each aspect of the present disclosure may be useful in the technical solution of other aspects. In addition, the composition and the various useful parameters according to each aspect of the present disclosure may be appropriately combined with other aspects to obtain favorable effects.

Since large volume expansion and shrinkage occur due to a reaction with lithium during silicon charging and discharging, the capacity of a lithium secondary battery including silicon may be rapidly reduced as the charge-discharge cycle proceeds.

In order to solve the problem described above, the inventors of the present disclosure found that when the particle size and crystallite size of silicon nanoparticles included in a negative electrode material are controlled to certain levels, the high capacity characteristics of the negative electrode material may be maintained, while the lifespan characteristics of the negative electrode material may be improved.

In addition, as described above, the inventors of the present disclosure also found that as a method for controlling the particle size and crystallite size of silicon nanoparticles to certain levels, it is effective to control a slurry processing rate (flow rate) during the mechanical milling of a silicon raw material.

In addition to this, the inventors learned that as another method for suppressing the swelling of the silicon nanoparticles described above, it is useful to set the fixed carbon content and β-resin content of pitch to certain ranges, thereby deriving the present disclosure.

From this point of view, an example embodiment in the present disclosure may include a silicon-carbon composite including silicon nanoparticles, crystalline carbon, and first amorphous carbon, wherein the silicon nanoparticles and the crystalline carbon may be distributed in the first amorphous carbon. Hereinafter, each component will be described in detail.

The silicon-carbon composite according to an example of the present disclosure may include silicon nanoparticles.

As a non-limiting example, the silicon nanoparticles may have a D50 particle size of less than 150 nm. Herein, D50 in the present specification may refer to a particle diameter corresponding to a volume accumulation of a particle size distribution of 50%. Thus, reversible charge-discharge may proceed without cracking by suppressing swelling of the silicon nanoparticles of the negative electrode material according to an example of the present disclosure. However, when the silicon nanoparticles have an excessively small D50 particle size, the number of silicon nanoparticles included in the negative electrode material is excessively increased to increase a specific surface area, and thus, capturing by the first amorphous carbon described later may become difficult. In addition to this, in a non-limiting example of the present disclosure, the lower limit of the D50 particle size of the silicon nanoparticles may be 115 nm for the purpose of securing the high capacity characteristics of the negative electrode material.

According to an example of the present disclosure, the Dmax particle size of the silicon nanoparticles may be less than 250 nm. Herein, the Dmax particle size may refer to the largest particle diameter in the particle size distribution. That is, in the present disclosure, the swelling of the silicon nanoparticles is prevented by controlling the D50 particle size of the silicon nanoparticles and simultaneously controlling the Dmax particle size, and thus, the lifespan characteristics of the negative electrode material may be improved. As another example, the Dmax particle size may be less than 245 nm.

According to a non-limiting example of the present disclosure, the crystallite size of the silicon nanoparticles may be less than 18 nm. When the crystallite size is 18 nm or more, a problem of swelling of the silicon nanoparticles may arise due to the repeated charging and discharging. As another example, the crystallite size may be 17.5 nm or less or 17.3 nm or less. However, when the crystallite size is excessively small, fine powder such as D1 and D10 is increased, and thus, capturing by pitch may become difficult. As a result, since the specific surface area may be increased, in a non-limiting example of the present disclosure, the lower limit of the crystallite size may be 16.5 nm. Herein, the crystallite size may be generally measured using XRD, and may be calculated on the plane (111) showing the highest peak of the silicon nanoparticles using the following Scherrer Equation:
${D}_{p} = 0.9 \times \frac{Kλ}{β \times Cosθ}$
(Dp_{:} average crystallite size, β: FWHM, θ: Bragg angle, λ: X-ray wavelength, K: shape factor).

The negative electrode material for a lithium secondary battery according to an example embodiment in the present disclosure may secure the high capacity characteristics of the negative electrode material, by including 50 wt% or more of the silicon nanoparticles. More specifically, the content of the silicon nanoparticles may be 55 wt% or more. However, when the silicon nanoparticles are excessively included in the negative electrode material, the silicon nanoparticles and the crystalline carbon described later may not be completely surrounded by a carbon coating layer each other or as a whole, and in this case, a result of collapse of the structure of the negative electrode material which is a silicon-carbon composite may occur. For this reason, an example embodiment in the present disclosure may include 65 wt% or less of the silicon nanoparticles with respect to the total weight of the negative electrode material for a lithium secondary battery. More specifically, the content of the silicon nanoparticles may be 60 wt% or less.

The silicon-carbon composite according to an example in the present disclosure may include crystalline carbon, in addition to the silicon nanoparticles described above. Since the conductivity of the negative electrode material may be improved through the crystalline carbon, the negative electrode material according to an example of the present disclosure may increase cycling efficiency during repeated charging and discharging by including the crystalline carbon.

As an example, the crystalline carbon may be any one or more of artificial graphite, flake graphite, amorphous graphite, CNT, and graphene.

For the purpose described above, an example of the present disclosure may include 15 wt% or more of the crystalline carbon with respect to the total weight of the negative electrode material for a lithium secondary battery. More specifically, the crystalline carbon may be included at 20 wt% or more with respect to the total weight of the negative electrode material. However, when the amount becomes excessive, capturing by the first amorphous carbon may be difficult, and thus, in an example embodiment in the present disclosure, a weight ratio of the crystalline carbon may be 25 wt% or less with respect to the total weight of the negative electrode material.

Meanwhile, the silicon-carbon composite according to an example of the present disclosure may include a first amorphous carbon, and the silicon nanoparticles and the crystalline carbon described above may be distributed in the first amorphous carbon. Thus, the first amorphous carbon may reinforce a contact path between the silicon nanoparticles and the conductive material, while controlling swelling of the silicon nanoparticles.

In addition, the first amorphous carbon according to an example embodiment in the present disclosure may be carbonized pitch having a fixed carbon content of 70% or more. Herein, the pitch may include coal-based pitch and petroleum-based pitch.

As the fixed carbon value of the pitch increases, a conductive path with silicon nanoparticles having low self-conductivity is produced to induce an increase in capacity and efficiency. In addition, when the fixed carbon value satisfies the range, internal pores of the negative electrode material of the present example embodiment may be decreased. Accordingly, a side reaction with an electrolyte solution may also be decreased, thereby contributing to an increase in initial efficiency of a battery. To this end, in an example of the present disclosure, the lower limit of the fixed carbon content of the first amorphous carbon may be 70%, and in another example, the lower limit of the fixed carbon content may be 73% or 75%.

In addition to this, the first amorphous carbon according to an example embodiment in the present disclosure may be carbonized pitch having a β-resin value of 25% or more.

Specifically, the β-resin value may refer to a value obtained by excluding a quinoline capacity (benzeneinsoluble) from benzene-insoluble content. The β-resin value is proportional to the caking property. According to an example embodiment in the present disclosure, when the β-resin value uses the coal-based pitch or the petroleum-based pitch satisfying the range, the porous structure of the silicon-carbon composite may be maintained more stably. Accordingly, an example embodiment in the present disclosure may implement a lithium secondary battery having excellent lifespan characteristics and electrode plate swelling characteristics. As another example, the β-resin value of the pitch may be 26% or more, and as another example, it may be 28% or more.

Meanwhile, according to another example of the present disclosure, the silicon-carbon composite including the silicon nanoparticles, the crystalline carbon, and the first amorphous carbon is used as a core, as described above, and a second amorphous carbon layer surrounding the silicon-carbon composite may be further included.

The second amorphous carbon layer may refer to a coating layer of a carbonized carbon-based material, and an example of the carbon-based material may be petroleum-based pitch, coal tar, PAA, PVA, and the like having a softening point of lower than 250°C. The second amorphous carbon layer as such may finally perform a carbon coating treatment of the silicon nanoparticles exposed to the surface in a pulverization process such as JET milling of Si-C particles, thereby minimizing a side reaction with an electrolyte solution and the like.

Hereinafter, the negative electrode material for a lithium secondary battery according to an example embodiment in the present disclosure including the above components in whole or in part will be described.

The negative electrode material for a lithium secondary battery according to an example of the present disclosure may have a D50 particle size of 10.0 µm or more and 15.0 µm or less.

In addition, as described above, the negative electrode material according to an example of the present disclosure may show a low specific surface area, by controlling the characteristics of the silicon nanoparticles included in the negative electrode material. More specifically, the specific surface area of the negative electrode material according to an example embodiment in the present disclosure may be less than 6 m²/g. As another example, the specific surface area may be less than 5 m²/g or less than 4.5 m²/g.

Hereinafter, the method for manufacturing a negative electrode material for a lithium secondary battery of the present disclosure will be described. However, the following method for manufacturing a negative electrode material for a lithium secondary battery may be only an example, and it should be noted that the negative electrode material for a lithium secondary battery of the present disclosure is not necessarily manufactured by the present manufacturing method, and there is no problem in using any manufacturing method for implementing each example embodiment in the present disclosure as long as it is a method meeting the claims of the present disclosure.

The method for manufacturing a negative electrode material for lithium secondary battery according to an example of the present disclosure may include: pulverizing a silicon raw material (poly-Si) through mechanical milling to obtain silicon nanoparticles; adding crystalline carbon and pitch to the silicon nanoparticles and then mixing them to obtain a mixture; pressure molding the mixture to obtain a molded body; and pulverizing and classifying the molded body. Hereinafter, each step will be described in detail.

First, in an example embodiment in the present disclosure, a silicon raw material (poly-Si) may be pulverized through mechanical milling to obtain silicon nanoparticles.

As an example, the mechanical milling may be performed using stabilized zirconia. In addition, in order to suppress occurrence of fine particles and prevent oxidation of the silicon particles by improving nano-sizing efficiency, the size of the zirconia beads may be less than twice D99 of the silicon raw material, but since the used zirconia beads may be used in various sizes in process design, the present disclosure is not limited thereto.

Since other detailed conditions during mechanical milling may be sufficiently designed by a person skilled in the art according to the purpose, they are not separately limited. However, as an example, a ball per ratio (BPR) of the stabilized zirconia ball to the silicon raw material may be 5:1, and the rotation speed of a rotor inside the pulverizer may be maintained at 2500 rpm.

Further, according to an example of the present disclosure, the solvent in the mechanical milling may be an organic solvent such as ethanol and IPA in order to prevent oxidation of the silicon raw material.

In particular, according to a non-limiting example of the present disclosure, a slurry processing rate (flow rate) in the mechanical milling may be 1.5 kg/min or more and 2.3 kg/min or less. This is for securing the desired particle size characteristics of the silicon nanoparticles, by controlling the slurry throughput per hour to an appropriate level in the mechanical milling step described above. More specifically, as the slurry throughput per hour increases in the mechanical milling, a tendency for the particle size of the silicon nanoparticles to decrease may occur. That is, in an example of the present disclosure, D50 of the silicon nanoparticles may be 115 nm or more and less than 150 nm and a Dmax particle size may be less than 250 nm, by setting the slurry throughput per hour to 1.5 kg/min or more and 2.3 kg/min or less. As another example, the slurry throughput per hour may be 1.6 kg/min to 2.1 kg/min, and as another example, may be 1.7 kg/min to 2.0 kg/min.

Next, in an example embodiment in the present disclosure, crystalline carbon and pitch may be added to the silicon nanoparticles obtained as described above and then mixed to obtain a mixture.

The crystalline carbon may be least any one or more of artificial graphite, flake graphite, amorphous graphite, CNT, and graphene, and the pitch may have a fixed carbon content of 70% or more and a β-resin value of 25% or more. In this regard, since the negative electrode material of the present disclosure is as described above, the description will be omitted.

The mixing of the silicon nanoparticles, the crystalline carbon, and the pitch may be performed simultaneously, or at least two or the three may be first mixed, and then the remaining one may be mixed.

When the silicon nanoparticles and the crystalline carbon are first mixed, and then the pitch is added, according to an example embodiment in the present disclosure, a mixture of the silicon nanoparticles and the crystalline carbon may be spray dried to remove the solvent, the pitch may be added to the spray dried body obtained therefrom, and then they may be mixed to obtain a negative electrode material precursor.

In addition, as a non-limiting example, the crystalline carbon may have a central particle size (D50) smaller than the central particle size of the spray dried body, so that the crystalline carbon may be completely captured in the spray dried body, and the central particle size (D50) may be 5 µm to 10 µm.

In addition, the mixing may be performed by a contact-mediated milling process among powders, and as a non-limiting example, it may be performed by mechanofusion or ball milling. As such, the milling process is performed through a contact-mediated milling process among powders, an independent flow of silicon nanoparticles during mixing with a solvent may be decreased.

Next, the method for manufacturing a negative electrode material for a lithium secondary battery according to an example embodiment in the present disclosure may include obtaining a molded body by pressure molding.

In addition, according to a non-limiting example, a pressure of less than 1 ton/cm² may be applied during the pressure molding. When a pressure of 1 ton/cm² or more is applied, volatile matter in internal pitch may not evaporate during carbonization later, and also, when the pressure increases, particle strength is increased to cause a side reaction of increasing fine powder occurrence during final particle pulverization, and thus, in the present disclosure, the pressure during pressure molding may be less than 1 ton/cm², as described above. As another example, the pressure may be less than 0.9 ton/cm² or less than 0.8 ton/cm².

In the present disclosure, the precursor may be carbonized at 800°C or higher to evaporate the volatile components present inside the existing precursor and harden the pitch to secure the internal structure of the negative electrode material. In addition, when the temperature excessively rises during the carbonization, capacity and efficiency may be reduced due to occurrence of silicon carbide and silicon nitride having no electrical performance, and thus, the carbonization may be performed in a temperature range of 1000°C or lower. In particular, the carbonization may be performed in an inert atmosphere for suppressing oxidation of silicon particles.

As such, after carbonization, according to the method for manufacturing a negative electrode material for a lithium secondary battery according to an example embodiment in the present disclosure, the molded body may be pulverized and classified. Thus, a negative electrode material having a desired size may be obtained. As a non-limiting example, the pulverization may be performed by dry pulverization, and the dry pulverization may be performed using a JET mill or pin mill.

As described above, after obtaining the negative electrode material by pulverization and classification, an example of the present disclosure may further include carbon coating on a surface of the negative electrode material.

The carbon coating step may be performed by adding a carbon-based material and heat treating, and the carbon-based material may be at least one of petroleum-based pitch, coal tar, PAA, and PVA having a softening point of lower than 250°C. In addition, though it is not limited thereto, the coating may be performed using a twisted blade mixer. Herein, process variables include time, rotational speed, and the like, but considering that these are matters which may be designed by a person skilled in the art appropriately for the purpose, they are not described in the present disclosure.

Hereinafter, a negative electrode of a lithium secondary battery of the present disclosure will be described in detail.

The negative electrode for a lithium ion secondary battery according to an example embodiment in the present disclosure includes a negative electrode current collector and a negative electrode active material layer.

The negative electrode current collector may be a conductive plate including copper, stainless steel, aluminum, nickel, titanium, carbon, or a combination thereof, but is not limited thereto.

The negative electrode active material layer may include a negative electrode active material, a binder, and optionally a conductive material.

The negative electrode active material may be the negative electrode material for a lithium ion secondary battery described above, and the detailed description thereof is as above. The negative electrode active material may further include a lithium-containing metal oxide in addition to the negative electrode material for a lithium ion secondary battery described above. The negative electrode active material may be included at 75 wt% or more, for example, 75 to 99 wt%, 80 to 99 wt%, or 85 to 99 wt%, with respect to the total content of the negative electrode active material layer.

The binder is a component for increasing a binding property between the negative electrode active material and the conductive material and adhesion in the negative electrode current collector, and for example, may include polyvinylidene fluoride (PVDF), polyvinyl alcohol (PVA), carboxymethylcellulose (CMC), starch, hydroxypropyl cellulose, regenerated cellulose, polyvinylpyrrolidone, tetrafluoroethylene, polyethylene, polypropylene, ethylenepropylene-diene polymer (EPDM), sulfonated-EPDM, styrenebutadiene rubber, fluorine rubber, or a copolymer or combination thereof, but is not limited thereto. The binder may be included at 30 wt% or less, for example, 0.1 to 30 wt%, 1 to 20 wt%, or 3 to 15 wt%, with respect to the total content of the negative electrode active material layer.

The conductive material may be a carbon material, and may be, for example, graphite, carbon black, fluorinated carbon, conductive fiber, conductive metal oxides, or a combination thereof, but is not limited thereto. The conductive material may be included at 20 wt% or less, for example, 0.1 to 20 wt%, 1 to 15 wt%, or 1 to 10 wt%, with respect to the total content of the negative electrode active material layer.

The lithium ion secondary battery according to an example embodiment includes a positive electrode, a negative electrode, a separator, and an electrolyte.

The positive electrode includes a positive electrode current collector and a positive electrode active material layer.

The positive electrode current collector may be a conductive plate including stainless steel, aluminum, nickel, titanium, carbon, or a combination thereof, but is not limited thereto.

The positive electrode active material layer includes a positive electrode active material, a binder, and optionally a conductive material.

The positive electrode active material is a compound capable of reversible intercalation and deintercalation, and may include, for example, a lithium metal oxide including one or more metals of nickel (Ni), cobalt (Co), manganese (Mn), and/or aluminum (Al) and lithium. The lithium metal oxide may be, for example, a lithium nickel oxide, a lithium manganese oxide, a lithium cobalt oxide, a lithium nickel cobalt oxide, a lithium nickel manganese oxide, a lithium nickel cobalt manganese oxide, a lithium nickel cobalt aluminum oxide, or a combination thereof. The positive electrode active material may be included at 75 wt% or more, for example, 75 to 99 wt%, 80 to 99 wt%, or 85 to 99 wt%, with respect to the total content of the positive electrode active material layer.

The binder is a component for increasing a binding property between the positive electrode active material and the conductive material and adhesion in the positive electrode current collector, and for example, may include polyvinylidene fluoride, polyvinyl alcohol, carboxymethylcellulose (CMC), starch, hydroxypropyl cellulose, regenerated cellulose, polyvinylpyrrolidone, tetrafluoroethylene, polyethylene, polypropylene, ethylenepropylene-diene terpolymer (EPDM), sulfonated EPDM, styrenebutadiene rubber, fluorine rubber, or a copolymer or combination thereof, but is not limited thereto. The binder may be included at 30 wt% or less, for example, 0.1 to 30 wt%, 1 to 20 wt%, or 3 to 15 wt%, with respect to the total content of the positive electrode active material layer.

The conductive material may be a carbon material, and may be, for example, graphite, carbon black, fluorinated carbon, conductive fiber, conductive metal oxides, or a combination thereof, but is not limited thereto. The conductive material may be included at 20 wt% or less, for example, 0.1 to 20 wt%, 1 to 15 wt%, or 1 to 10 wt%, with respect to the total content of the positive electrode active material layer.

The separator may be placed between the positive electrode and the negative electrode and may be a porous polymer film.

The electrolyte may be, for example, an organic electrolyte solution or polymer electrolyte solution in which a lithium salt is dissolved in a non-aqueous solvent. The non-aqueous solvent may be propylene carbonate, ethylene carbonate, butylene carbonate, benzonitrile, acetonitrile, tetrahydrofuran, 2-methyltetrahydrofuran, γ-butyrolactone, dioxolane, 4-methyldioxolane, N,N-dimethylformamide, dimethylacetamide, dimethylsulfoxide, dioxane, 1,2-dimethoxyethane, sulfolane, dichloroethane, chlorobenzene, nitrobenzene, dimethylcarbonate, methylethylcarbonate, diethylcarbonate, methylpropylcarbonate, methylisopropylcarbonate, ethylbutyl carbonate, dipropyl carbonate, diisopropyl carbonate, dibutylcarbonate, diethylene glycol, dimethylether, or a combination thereof.

The lithium salt includes Li⁺ as a cation, and F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, or a combination thereof, as an anion.

The lithium ion secondary battery may be applied to various electronic devices requiring energy supply, and for example, may be applied to electric vehicles, hybrid electric vehicles, power storage devices, or electronic products.

Hereinafter, the present disclosure will be specifically described through the following Examples. However, it should be noted that the following Examples are only for describing the present disclosure in detail by illustration and are not intended to limit the right scope of the present disclosure. The reason is that the right scope of the present disclosure is determined by the matters described in the claims and reasonably inferred therefrom.

### Mode for Invention

### (Example 1)

### (1) Manufacture of negative electrode material

A silicon raw material having the particle size of the following Table 1 was subjected to mechanical milling. A slurry processing rate during the mechanical milling is shown in the following Table 2. At this time, the mechanical milling was performed for 12 hours. The particle size distribution of the silicon nanoparticles obtained therefrom is shown in the following Table 2. The manufactured silicon nanoparticles were added at the content of 53 wt% based on the weight of the final negative electrode material, flake graphite particles having a central particle size of 8 µm were added at a content of 18 wt%, and dispersion was performed using a high-speed mixer. Thereafter, a silicon-graphite spray dried precursor having a central particle size of about 20 um was synthesized and mixed with pitch powder, the powder was charged into a cylindrical mold having a radius of 5 cm for forming a carbon support of the powder, and single-axis pressure molding was performed with a pressure of about 50 ton. The block obtained in the pressurization process was heat treated at 950°C in an inert atmosphere for preventing oxidation of the silicon nanoparticles and pulverized to a range of 10 µm to 15 um based on D50 with a JET mill, coal tar at the same amount in a range of 5 wt% to 10 wt% relative to the amount of the silicon nanoparticles added was added, stirring was performed for about 30 minutes with a twisted blade mixer, a heat treatment was performed in an inert atmosphere at lower than 1000°C, and then a final negative electrode material was obtained through sieving of #635mesh (20 um).

Thereafter, the crystallite size of the silicon nanoparticles was measured, and the measured value is shown in the following Table 3.

At this time, the particle size of the silicon raw material, the particle size of the silicon nanoparticles, and the particle size of the final negative electrode material were measured with a particle size meter available from Beckmann coulter.

In addition, the half-value width of the silicon nanoparticles was measured using XRD, and more specifically, the half-value width of X-ray diffraction angle (2θ) using a CuKα ray on a (111) plane was measured using XRD. Next, the crystallite size of the silicon nanoparticles was derived by the following Sherrer equation, using the half-value width on the (111) plane of the silicon nanoparticles obtained according to the above description:
${D}_{p} = 0.9 \times \frac{Kλ}{β \times Cosθ}$
(Dp_{:} average crystallite size, β: FWHM, θ: Bragg angle, λ: X-ray wavelength, K: shape factor).

**[Table 1]**

| Classification | Raw material particle size (µm) | Crystal lite size (nm) | Electrochemical performance | | | |
|---|---|---|---|---|---|---|
| | | | Discharge capacity (mAh/g) | Initial efficiency (%) | Lifespan (%) | Swelling ratio (%) |
| D1 | 0.19 | | | | | |
| D10 | 1.07 | | | | | |
| D50 | 1.56 | 39.0 | 3,217 | 85.7 | 24.1 | 284.7 |
| D90 | 7.93 | | | | | |
| D99 | 10.44 | | | | | |

**[Table 2]**

| Classification | Slurry flow rate (kg/min) | Particle size (µm) | | | | | |
|---|---|---|---|---|---|---|---|
| | | D1 | D10 | D50 | D90 | Dmax | Span |
| Comparative Example 1 | 1.340 | 0.046 | 0.076 | 0.124 | 0.190 | 0.454 | 0.915 |
| Comparative Example 2 | 2.380 | 0.046 | 0.075 | 0.114 | 0.172 | 0.238 | 0.845 |
| Comparative Example 3 | 1.104 | 0.046 | 0.080 | 0.133 | 0.243 | 0.746 | 1.225 |
| Inventive Example 1 | 2.084 | 0.046 | 0.076 | 0.119 | 0.179 | 0.243 | 0.866 |
| Comparative Example 4 | 1.201 | 0.046 | 0.079 | 0.128 | 0.213 | 0.670 | 1.045 |
| Inventive Example 2 | 1.785 | 0.046 | 0.076 | 0.122 | 0.184 | 0.249 | 0.882 |

### (2) Electrochemical evaluation of single electrode

75 wt% of the negative electrode material manufactured according to the above description, 1 wt% of a conductive material, and 24 wt% of a PAA binder (Mw 240,000), based on the total weight of the negative electrode were mixed in a tertiary distilled water solvent to manufacture a negative electrode active material slurry. The negative electrode active material slurry was applied on a copper (Cu) current collector at a loading amount of 4 mg/cm², dried, and compressed on a roll press at a rolling density of 1.00 g/cc. Thereafter, drying in a vacuum was performed in a vacuum oven to manufacture a negative electrode.

Next, in order to evaluate electrochemical properties, a lithium secondary battery was manufactured.

Specifically, a 2032 coin cell type half cell (half coin cell) was manufactured according to a common manufacturing method, using the negative electrode manufactured by the method, a counter electrode of lithium (Li)-metal, and an electrolyte solution in which an 1 mol LiPF₆ solution was dissolved in a mixed solvent of a volume ratio of ethylene carbonate (EC) : ethyl methyl carbonate (EMC) of 3:7. 1.5 wt% of a VC additive was added to the electrolyte solution.

The discharge capacity and initial efficiency of the battery were measured and are shown in the following Table 3.

Current during charging and discharging was measured to be 0.1 C in the initial cycle. In addition, current of 0.5 C was applied during charging and discharging based on the first capacity at 1 C to measure the 50-cycle life. The charge cut-off current at this time was 0.005 C.

### (3) Electrochemical evaluation of mixed electrode

Each of 21 wt% of the manufactured negative electrode material and 79 wt% of the commercial spherical natural graphite were mixed to obtain a negative electrode active material, and a negative electrode capacity was designed to be 620 mAh/g as a target value, thereby manufacturing a 2032 coin cell type half cell. The composition of the negative electrode was at a weight ratio of the negative electrode active material : conductive material : CMC : SBR = 96.1:1:1.7:1.2 based on the total weight, and a rolling density was maintained at 1.3 to 1.4 g/cc.

As the electrolyte solution for the lifespan test, EC:EMC = 3:7 (1.0M LiPF₆) + VC 1.5 wt% + FEC 7 wt% was used. The charge-discharge protocol was identically evaluated as the electrochemical evaluation of the negative electrode material described above alone, and the measurement of the swelling ratio of the mixed electrode was performed by completing a 50th cycle using the 2032 coin cell type half cell, full charging to 0.005 V (0.005 C cut-off), disassembling the half cell, and measuring the thickness of the charged electrode.

**[Table 3]**

| Classification | Crysta llite size (nm) | Single electrode | | Mixed electrode | | | | |
|---|---|---|---|---|---|---|---|---|
| | | Discharge capacity (mAh/g) | Initial efficiency (%) | Discharge capacity (mAh/g) | Initial efficiency (%) | Lifes pan (%) | Swelling ratio (%) | Specific surface area (m²/g) |
| Comparative Example 1 | 18.05 | 1,564 | 84.9 | 591 | 88.1 | 75.1 | 68.1 | 4.01 |
| Comparative Example 2 | 16.46 | 1,512 | 85.4 | 589 | 88.4 | 78.1 | 61.8 | 6.87 |
| Comparative Example 3 | 18.84 | 1,623 | 83.9 | 617 | 88.4 | 61.4 | 88.7 | 3.54 |
| Inventive Example 1 | 17.16 | 1,655 | 86.1 | 625 | 90.5 | 84.4 | 57.8 | 4.72 |
| Comparative Example 4 | 18.31 | 1,624 | 84.4 | 615 | 89.1 | 71.1 | 72.4 | 3.61 |
| Inventive Example 2 | 17.24 | 1,664 | 86.2 | 622 | 90.1 | 80.1 | 59.5 | 4.41 |

Tables 2 and 3 show that Comparative Examples 1, 3, and 4 had a slurry processing rate of less than 1.5 kg/min, and thus, had an excessively increased Dmax particle size. As a result, Comparative Examples 1, 3, and 4 had poor lifespan characteristics and swelling ratio characteristics.

Since the slurry throughput per hour of Comparative Example 2 was more than 2.3 kg/min, the number of silicon nanoparticles was excessively increased, and thus, the pitch capturing effect was decreased. As a result, the specific surface area was large, and the electrochemical performance was worse than that of Examples 1 and 2.

However, it was confirmed that Tables 2 and 3 show that Inventive Examples 1 and 2 in which the characteristics of the silicon nanoparticles and the conditions in the manufacturing method suggested in the present disclosure were all satisfied showed excellent electrochemical performance. More specifically, Inventive Examples 1 and 2 showed lifespan characteristics of 80% or more, a swelling ratio of 60% or less, and a specific surface area of 6 m²/g.

### (Example 2)

Comparative Examples 5 and 6 were manufactured according to the same procedure as Inventive Example 1 of Table 3, except that pitches having different fixed carbon content and caking properties (β-resin value) were used. At this time, the fixed carbon contents and the β-resin values of the used pitches are shown in the following Table 4. A single electrode and a mixed electrode were manufactured using them to measure electrochemical performance, and the values measured for Comparative Examples 5 and 6 are shown in the following Table 5 together with the value measured for Inventive Example 1.

**[Table 4]**

| Classification | fixed carbon content (%) | β-resin value (%) |
|---|---|---|
| Pitch A | 77.71 | 28.05 |
| Pitch B | 71.01 | 15.17 |
| Pitch C | 57.15 | 25.11 |

**[Table 5]**

| Classification | | Crystallite size range (nm) | Measured value of crystallite size (nm) | Si-C alone | | 21% Si-C+ 79% natural graphite mixture | | | | |
|---|---|---|---|---|---|---|---|---|---|---|
| | | | | Discharge capacity (mAh/g) | Initial efficiency (%) | Discharge capacity (mAh/g) | Initial efficiency (%) | Life span (%) | Swelling ratio (%) | Specific surface area (m²/g) |
| Inventive Example 1 | Pitch A | | 17.16 | 1,655 | 86.1 | 625 | 90.5 | 84.4 | 57.8 | 4.72 |
| Comparative Example 5 | Pitch B | 17±0.5 | 17.37 | 1,555 | 84.1 | 574 | 87.7 | 70.4 | 70.4 | 7.77 |
| Comparative Example 6 | Pitch C | | 17.42 | 1,588 | 84.7 | 581 | 88.1 | 76.8 | 65.4 | 6.89 |

As shown in Comparative Example 5, when the β-resin value of the pitch was low, it was difficult to form a high-density carbon matrix, and the lifespan characteristics and the swelling ratio characteristics were poor.

In addition, in Comparative Example 6, since the fixed carbon content of the pitch was low, a content of pitch converted into carbon was low. As a result, Comparative Example 6 was not able to secure excellent electrochemical performance.

## Claims

1. A negative electrode material for a lithium secondary battery comprising: a silicon-carbon composite including silicon nanoparticles, crystalline carbon, and first amorphous carbon,
wherein the silicon nanoparticles and the crystalline carbon are distributed in the first amorphous carbon, and
the silicon nanoparticles have a Dmax particle size of less than 250 nm and a crystallite size of 16.5 nm or more and less than 18 nm.

2. The negative electrode material for a lithium secondary battery of claim 1, wherein the silicon nanoparticles have a D50 particle size of 115 nm or more and 150 nm or less.

3. The negative electrode material for a lithium secondary battery of claim 1, wherein the crystalline carbon is any one or more of artificial graphite, flake graphite, amorphous graphite, CNT, and graphene.

4. The negative electrode material for a lithium secondary battery of claim 1, wherein the first amorphous carbon is carbonized pitch having a fixed carbon content of 70% or more and a β-resin value of 25% or more.

5. The negative electrode material for a lithium secondary battery of claim 1,
wherein the silicon-carbon composite is used as a core, and
a second amorphous carbon layer surrounding the silicon-carbon composite is further included.

6. The negative electrode material for a lithium secondary battery of claim 1, wherein the negative electrode material has a D50 particle size of 10 µm or more and 15µm or less.

7. The negative electrode material for a lithium secondary battery of any one of claims 1 to 6, wherein the negative electrode material has a specific surface area of less than 6 m²/g.

8. A method for manufacturing a negative electrode material for a lithium secondary battery, the method comprising:
pulverizing a silicon raw material (poly-Si) through mechanical milling to obtain silicon nanoparticles;
adding crystalline carbon and pitch to the silicon nanoparticles and then mixing them to obtain a mixture;
pressure molding the mixture to obtain a molded body;
carbonizing the molded body; and
pulverizing and classifying the molded body,
wherein a slurry processing rate (flow rate) in the mechanical milling is 1.5 kg/min or more and 2.3 kg/min or less, and
the pitch has a fixed carbon content of 70% or more and a β-resin value of 25% or more.

9. The method for manufacturing a negative electrode material for a lithium secondary battery of claim 8, wherein the crystalline carbon is any one or more of artificial graphite, flake graphite, amorphous graphite, CNT, and graphene.

10. The method for manufacturing a negative electrode material for a lithium secondary battery of claim 8, wherein a solvent in the mechanical milling is ethanol or IPA.

11. The method for manufacturing a negative electrode material for a lithium secondary battery of claim 8, wherein the mixing is performed through a contact-mediated milling process among powders.

12. The method for manufacturing a negative electrode material for a lithium secondary battery of claim 8, wherein during the pressure molding, a pressure of less than 1 ton/cm² is applied.

13. The method for manufacturing a negative electrode material for a lithium secondary battery of claim 8, wherein the pulverizing is a dry pulverization process.

14. The method for manufacturing a negative electrode material for a lithium secondary battery of claim 8, further comprising carbon coating on a surface of the manufactured negative electrode material.

15. A negative electrode comprising the negative electrode material for a lithium ion secondary battery of any one of claims 1 to 7.

16. A lithium ion secondary battery comprising a positive electrode, the negative electrode of claim 15, and an electrolyte.
